# EUROPEAN PATENT SPECIFICATION

(11) **EP 2 502 463 B1**
(45) Date of publication and mention of the grant of the patent: **30.07.2014**
(21) Application number: 11702834.0
(22) Date of filing: 10.02.2011
(51) Int. Cl.: H05B 33/08

(54) **METHOD FOR SUPPLYING POWER TO LIGHT SOURCES, CORRESPONDING POWER SUPPLY UNIT AND LIGHT SOURCE**
VERFAHREN ZUR STROMZUFUHR AN LICHTQUELLEN, ENTSPRECHENDE STROMZUFUHREINHEIT UND LICHTQUELLE
PROCÉDÉ D'ALIMENTATION EN ÉNERGIE DE SOURCES DE LUMIÈRE, UNITÉ D'ALIMENTATION EN ÉNERGIE CORRESPONDANTE ET SOURCE DE LUMIÈRE

(30) Priority: 16.02.2010 IT TO20100112
(43) Date of publication of application: 26.09.2012
(73) Proprietor: OSRAM GmbH, 80807 München (DE); OSRAM S.P.A. - SOCIETA' RIUNITE OSRAM EDISON CLERICI, 20126 Milano (IT)
(72) Inventor: BRANCHETTI, Filippo, 31100 Treviso (IT); DE ANNA, Paolo, 31039 Treviso (IT); FROST, Tobias, 93133 Burglengenfeld (DE)
(86) International application number: PCT/EP2011/051933
(87) International publication number: WO 2011/101282

(56) References cited:
- DE-A1-102005 054 541

## Description

### Technical field

The present description relates to methods for regulating light sources.

The present description makes particular reference to the possible application for controlling light sources comprising a plurality of light generators which emit respective chromatically different light radiations that can be mixed with one another to produce a mixed light radiation.

The generators in question may be, for example, electrical generators, for example LED light generators, the light emission intensity of which is a function of the (average) supply power, for example a function of the average value of the electrical current flowing through them. These are therefore light generators which are susceptible to selective activation, i.e. in on/off mode, with respective supply powers over respective activation intervals included in an activation period.

### Description of the prior art

In LED lamps, it is common practice to mix radiations of different color (i.e. "chromatically different" radiations) produced by individual LED generators so as to obtain, as a result of the mixing, a light radiation with chromatic characteristics corresponding to specific coordinates Cx, Cy in the CIE 1931 diagram or to a specific color temperature value or CCT (Correlated Color Temperature).

In practice, this corresponds to mixing a certain set of colors originating from different generators so as to obtain the desired color. The result of the mixing action (i.e. the coordinates Cx, Cy or the CCT of the radiation resulting from the mixing) may be regulated by modifying the contribution of each mixed color, i.e. by varying the intensity of the radiation emitted by each of the generators; this result may be obtained, for example, by varying the duty cycle of the power supply (i.e. the activation interval) of the generator, that is to say by operating in accordance with a pulse width modulation (PWM) diagram, in ways which are wholly analogous to those commonly used to carry out the function known as "dimming".

In a light source (or "lamp") having a number of light generators (or "channels") subjected to mixing, a PWM modulation function can therefore be used:
- i) both to vary the comprehensive intensity of the radiation emitted by the lamp as a whole - by intervening on all the channels, i.e. on all the light generators active in the lamp - keeping the chromatic characteristics substantially unchanged (except for possible shift phenomena, which will be explained in more detail below),
- ii) and to reciprocally vary the contribution of the individual "channel" to the radiation obtained by the mixing action, so as to vary the chromatic characteristics of said radiation - keeping the comprehensive light intensity substantially unchanged.

In this respect, it can be seen that the individual "channels" (i.e. the individual generators which provide respective radiations intended to be mixed with one another) may be activated at different power levels, insofar as there can be channels which make a particularly considerable contribution to the mixed radiation and are activated at a power level (duty cycle) which is higher than the power level at which other channels which make a less considerable contribution to the mixing action are activated.

The text which follows refers principally to the second function outlined above, i.e. that which makes it possible to vary the chromatic characteristics of the light radiation resulting from the mixing, keeping the comprehensive light intensity substantially unchanged.

In the text which follows, it is therefore assumed for simplicity that what is involved is a plurality of light generators or "channels" CH1, CH2, CH3, ... supplied with respective supply powers P1, P2, P3, ... over respective activation intervals T1, T2, T3, ... included in an activation period T, which is assumed to have a constant duration value. According to known criteria, the value of the period T is chosen such as to utilize the effect known as "persistence of the image on the retina" such that, even if the individual light generators are activated periodically (i.e. once for each period T), the radiation emitted thereby and the mixed radiation generated by the lamp L as a whole are perceived as a continuous light by a human observer, without "flickering" phenomena. Typical values of the interval T can be chosen in the range between 1 and 10 ms, corresponding to repetition frequencies of the pulses emitted by the individual generators CH1, CH2, CH3 of between 100 and 1000 Hz.

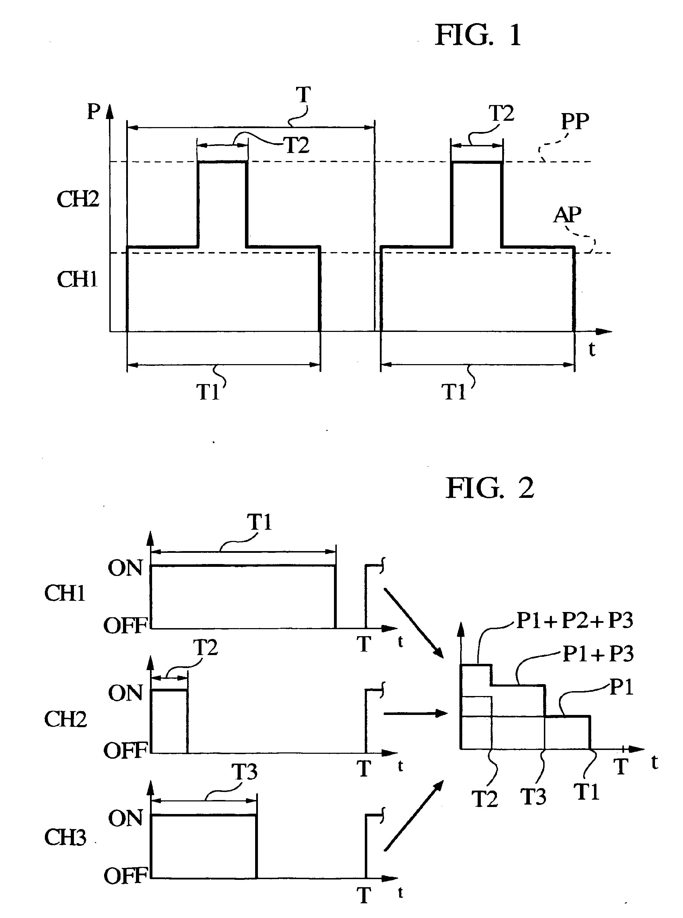

A situation of this type is shown schematically in figure 1 in the accompanying drawings, which refers for simplicity to the case of one light source comprising only two "channels" CH1 and CH2, i.e. only two generators, for example two LEDs.

In the situation shown in figure 1, the first "channel" CH1 is activated over an interval T1, whereas the second generator or second "channel" is activated in an interval of duration T2 (T2 < T1) which partially overlaps the interval T1. In figure 1, AP and PP respectively indicate the average power level and the peak power level consumed by the system containing the two channels CH1 and CH2. In the case under consideration, in which T2 is much shorter than T1, the average power AP is slightly less than the power P1 consumed by the first channel CH1, whereas the peak power PP (supplied over the interval of duration T2) corresponds to the sum P1 + P2 of the power consumptions of the first channel CH1 and of the second channel CH2 put together.

Therefore, the electrical power supply unit of such a light source has to be designed such that it is able to supply a power corresponding to the peak power PP. This is the case even if in reality, for most of the period T, the power supplied is that which corresponds to the power consumed by the first channel CH1 alone.

Figure 2 shows a situation which is likely to be established in the exemplary case of three channels CH1, CH2, CH3 activated respectively over an interval T1, over an interval T2 and over an interval T3, all three of which have a shorter duration than the period T fixed by the PWM modulation diagram. In this case, the activation takes place at respective power levels P1, P2, P3 which are not necessarily the same, i.e. with each channel CH1, CH2, CH3 being able to consume a respective percentage (%PPS) of the peak supply power.

By way of example, it is conceivable that the power P1 consumed by the channel CH1 corresponds to a percentage equal to 37.5% (%PPS=37.5%) of the overall peak power; this is also applicable to the channel CH2, whereas the channel CH3 consumes only 3.25% of the peak power (%PPS=3.25%).

With respect to the right-hand side of figure 2, assuming that all three intervals T1, T2 and T3 (it is assumed here that T1 > T3 > T2, but this is just an example) start at the same time as the period T, it can be seen that the overall consumption of the three channels CH1, CH2 and CH3 reaches the peak value P1+P2+P3 only for a (sub) period equal in length to T2, and then at first drops to the value P1+P3 for a subsequent interval of duration T3-T2, and then again to the value P1 for a subsequent interval of duration T1-T3. For the rest of the period T, of duration T-T1, the consumption is zero.

In order to sustain the operating modes referred to in figure 2, the power supply unit of the lamp has to be dimensioned to supply a peak power P1+P2+P3. However, this peak power is supplied only for a small fraction (the interval T2) of the period T, whereas for a good part of this period the power consumption is less (even much less) if not even zero.

As a corollary to that mentioned above, it can also be noted that the power supply units for light generators, such as LED light generators, mostly use commutated (switched-mode) power supply devices, which provide maximum efficiency when they operate at the maximum proposed power. This condition is far from being achieved either in the situation shown in figure 1 or in the situation shown in figure 2. It should also be stated that the commutation (on-off) of high-intensity currents inevitably causes electromagnetic interference (EMI).

DE 10 2005 054541 A1 discloses prior art according to the preamble of claim 1.

### Object and summary of the invention

The object of the invention is to provide a solution for driving light sources of the type specified above which is able to overcome the disadvantages outlined above.

According to the present invention, this object is achieved by means of a method having the characteristics specifically claimed in the claims which follow.

The invention also relates to a corresponding power supply unit as well as to a corresponding light source.

The claims form an integral part of the technical teaching given here in relation to the invention.

### Brief description of the accompanying drawings

The invention will now be described, purely by way of non-restrictive example, with reference to the accompanying drawings, in which:
- figures 1 and 2 have already been described above,
- figures 3 to 5 show the operating principle of various embodiments,
- figure 6 is a diagram showing various embodiments, and
- figure 7 is a flow chart relating to various embodiments.

### Detailed description of embodiments

The following description sets out various specific details aimed at giving an in-depth understanding of the embodiments. The embodiments may be realized without one or more of the specific details, or with other methods, components, materials, etc. In other cases, known structures, materials or operations are not shown or described in detail so as not to obscure various aspects of the embodiments.

The reference to "an embodiment" in this description means that a particular configuration, structure or feature described in relation to the embodiment is included in at least one embodiment. Hence, phrases such as "in an embodiment", which may occur at various points in this description, do not necessarily refer to the same embodiment. Moreover, particular shapes, structures or features can be combined in a suitable way in one or more embodiments.

The references used here are purely for convenience and do not therefore define the scope of protection or range of the embodiments.

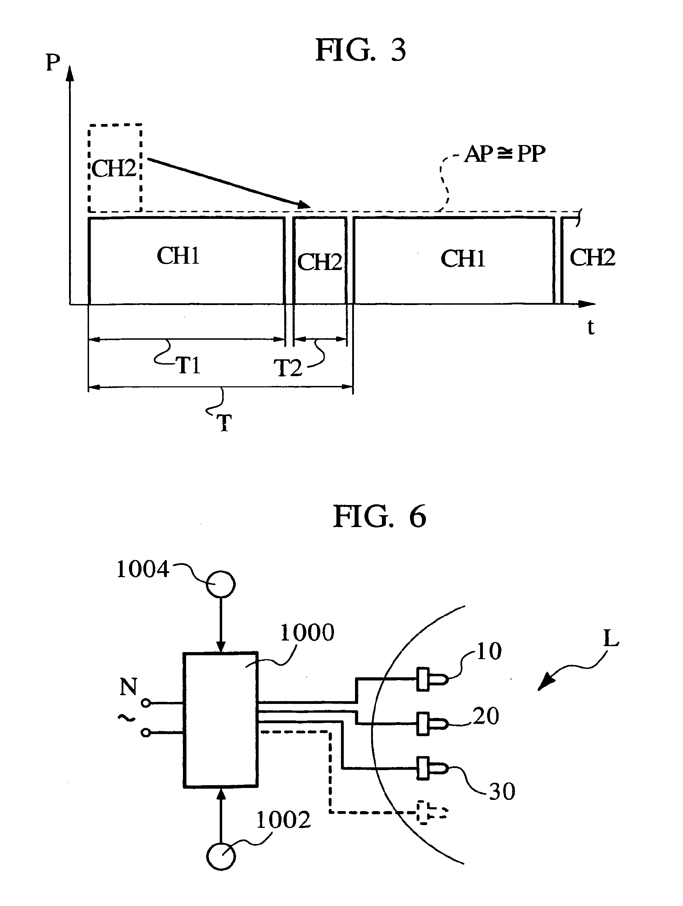

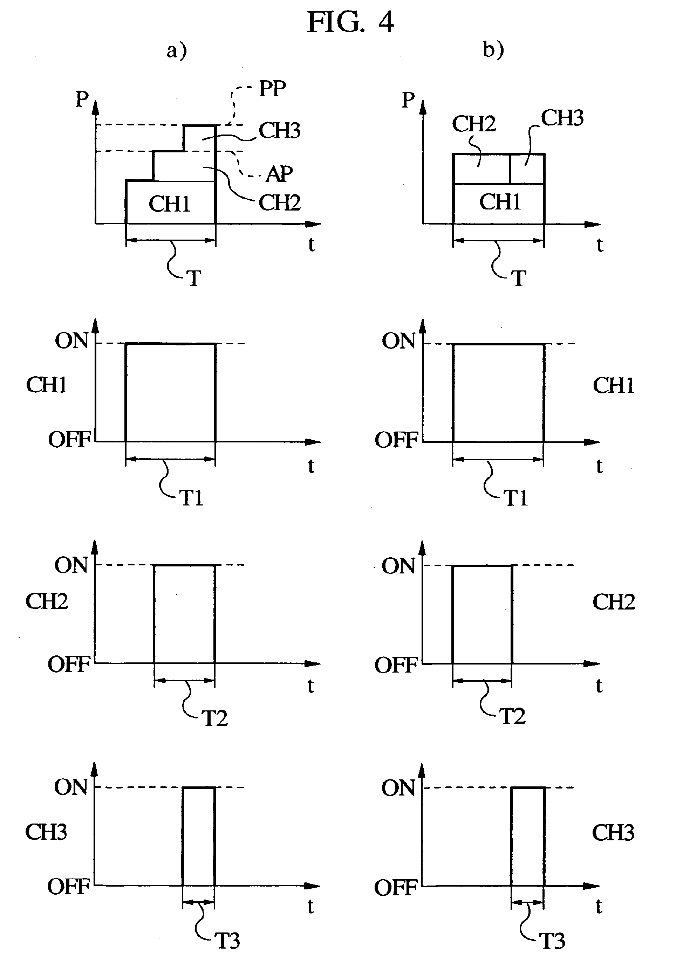

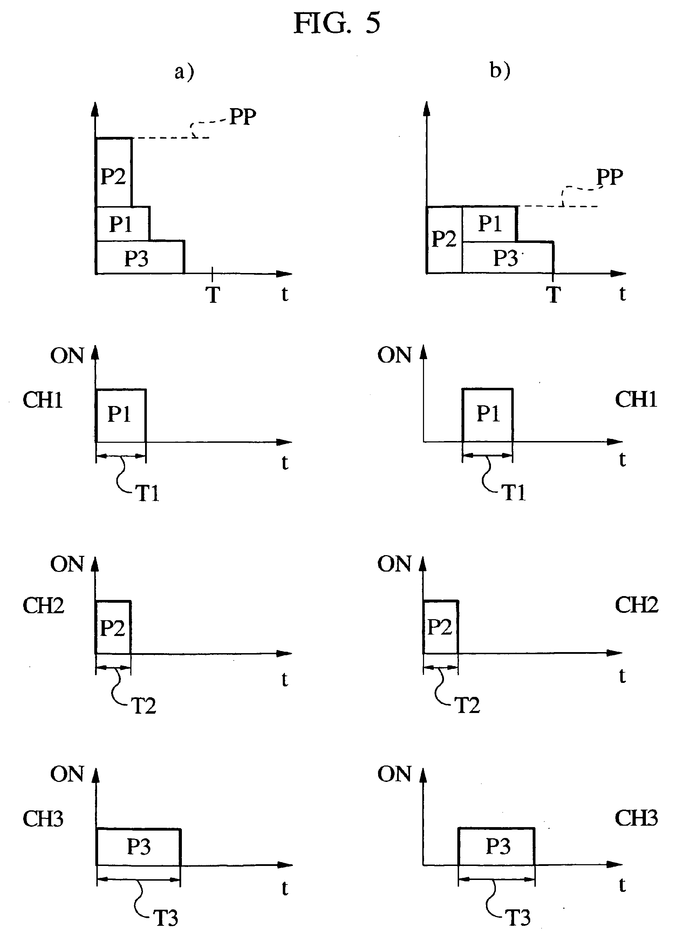

Figure 3 schematically shows, with reference to the simple case of only two channels CH1 and CH2, for better understanding, the general principle on which various embodiments are based. Figures 4 and 5 refer to cases which involve three channels CH1, CH2 and CH3.

The examples under consideration, like those already considered in relation to figures 1 and 2, therefore refer to the presence of a plurality of light generators, i.e. "channels" CH1, CH2, CH3, ..., which are assumed to emit respective chromatically different light radiations that can be mixed with one another to produce a mixed light radiation by selectively activating said generators with respective supply powers P1, P2, P3, ... over respective activation intervals T1, T2, T3, ... included in an activation period T.

The block diagram shown in figure 6 shows a plurality of LED light generators 10, 20, 30, ...
which can emit respective radiations with chromatically different characteristics and correspond exactly to the channels CH1, CH2, CH3, .... The LED generators 10, 20, 30, ... are supplied with power by a power supply unit 1000, which can be connected to the electric mains N.

According to criteria known per se, the unit 1000 is provided with two regulation functions 1002 and 1004 which respectively supervise:
- the regulation of the comprehensive intensity of the light radiation emitted by the source L and resulting from the mixing of the individual radiations produced by the generators 10, 20, 30, ... (which may be present in any number in the plurality),
- the control of the mixing function obtained by varying the intensity of the radiation emitted by the individual generator 10, 20, 30, ... so as to selectively vary the contribution made thereby to the radiation resulting from the mixing, hence varying the chromatic characteristics (Cx, Cy, CCT) of said radiation.

The recourse to light generators such as LEDs, even if preferred, is by no means to be considered imperative, insofar as the solution described here lends itself to general use, in connection with any light generator having a light emission intensity which is a function of the (average) supply power, for example a function of the average value of the electrical current flowing through it. Accordingly, even if the rest of the present description makes reference to a method for regulating the radiation intensity of the individual generators effected with PWM modality, it is to be understood that the invention also encompasses other regulation options, such as, for example, regulation by means of alternating current, pulse density modulation and statistical dimming methods.

In turn, whereas the rest of the description, provided purely by way of example, makes reference at least implicitly to control effected on the supply current of the channels CH1, CH2, CH3, ... (i.e. of the LED generators 10, 20, 30, ...), various embodiments may provide for a regulation method conducted, in addition or as an alternative to a current control function, by means of a function for controlling the supply voltage of the generators 10, 20, 30, .....

The description which follows refers principally to the method for regulating the light intensity of the channels CH1, CH2, CH3, ..., which is directed at regulating the chromatic characteristics of the mixed radiation emitted by the lamp L (control function indicated by 1004 in figure 6).

Figure 3 refers to a source L comprising two generators, i.e. two "channels" CH1 and CH2, which are assumed to be intended for activation over two respective intervals equal to T1 and to T2 with respective power levels P1, P2, which, for simplicity, are assumed to be substantially identical.

The solution shown schematically in figure 3 is based on the recognition that, when it is necessary to supply power to the two channels CH1 and CH2 over two respective intervals T1 and T2 (with T1+T2<T - where T is the "general" power supply period fixed in accordance with the criteria already indicated above), it is advantageous to avoid simultaneous activation of the two channels CH1 and CH2.

By way of example, with reference to the part on the far left of figure 3, it can be seen that, when supplying power to the channel CH2 over an interval T2 which starts at the same time as the activation interval T1 of the channel CH1, it is necessary to provide over the initial interval of duration T2 an overall electrical power P1+P2 equal to the power consumed by the two channels CH1, CH2 put together. In this case, it is possible to defer the activation of the channel CH2 to a time when the interval T1 has elapsed, as indicated schematically by the arrow which can be seen in figure 3.

In this case, while obtaining the same results in terms of the power supply to the two channels CH1 and CH2, there is the considerable advantage that the power supply unit 1000 may be dimensioned without having to take into account the peak power given by the sum of the power P1 consumed by the channel CH1 and by the power P2 consumed by the channel CH2.

In the case (given for simplicity) where P1=P2, the set peak power of the source 1000 no longer has to be equal to P1+P2, but in practice has to be equal to P1=P2, which in essence means half.

The solution shown in figure 3 is therefore based on the identification of at least one pair of generators, CH1 and CH2, for which the sum of the respective activation intervals T1, T2 is less than the activation period T (i.e. with T1+T2 ≤ T), in order to temporally offset the activation of the generators CH1, CH2, avoiding simultaneous activation.

In practice, the principle shown in figure 3 corresponds to an "alignment" function for driving the various channels CH1, CH2 (which can be implemented, according to criteria known per se, for example, in the programming of the unit 1000) such as to "minimize" the number of channels active at the same time: with reference to the simple example shown in figure 3, instead of there being two channels active at the same time, there is at most only one active channel, first the channel CH1 and then the channel CH2.

By minimizing the number of channels which are active at the same time, it is no longer necessary for the unit 1000 to be dimensioned so as to be able to take into account the requirements for supplying power to all the channels of the source L (as would occur in the case of an operation corresponding to the solutions shown in figures 1 and 2). By virtue of the abovementioned optimization function, it is possible to dimension the power supply unit 1000 in such a manner that it is able to supply power - at most - to all the channels for which simultaneous activation is anticipated.

This makes it possible to achieve a number of advantages:
- firstly, the power supply unit 1000 can be designed on the basis of a lower peak power, with advantages both in terms of dimensions and in terms of cost, and
- secondly, the average power supplied by the power supply unit 1000 will be next to the peak power, with significant advantages in terms of efficiency.

The diagram shown in figure 3 is substantially based on the idea of utilizing the "empty" space left free, during period T, by the interval T1 for supplying power to the first channel CH1 in order to supply power to the channel CH2.

Such a condition, i.e. the availability of an "empty" interval, is not always present, particularly in the case of sources L comprising more than two channels.

By way of example, figure 4 refers to a source with three channels CH1, CH2 and CH3 intended to be supplied with power over respective intervals equal to T1, T2 and T3 in conditions in which the interval T1 takes up virtually all of the period T (CH1 supplied with power with 100% duty cycle).

However, in these conditions, too, various embodiments may allow for an optimization function, temporally shifting (i.e. bringing forward or delaying) the occurrence of the intervals for supplying power to some of the generators.

By way of example, the diagram shown in figure 4 refers to a situation where the interval T2 for supplying power to the channel CH2 and the interval T3 for supplying power to the channel CH3 satisfy the condition T2+T3 ≤ T.

In this case, the activation criterion shown on the left-hand side, indicated by a), of figure 4, for which the two channels CH2 and CH3 are supplied with power over an interval of duration T3, can be replaced by the activation criterion shown on the right-hand side, indicated by b), of said figure 4, which provides for "bringing forward" the interval T2 for supplying power to the channel CH2 such that it temporally precedes the interval T3 for supplying power to the channel CH3.

The top part of figure 4 compares, respectively for the solution shown in part a) and for the solution shown in part b), the effect on the power consumption of the channels CH1, CH2 and CH3 and therefore on the dimensioning of the power supply unit 1000. With regard to the solution shown in part b) of figure 4, it can be seen that the peak power PP is virtually returned to the value of the average power AP, again achieving the advantages outlined above.

If there are more than two channels, too, and also if there is no "empty" space present during the period T, it is possible to minimize the number of channels activated simultaneously, for example, as shown in part b) of figure 4, by bringing forward the activation interval T2 of the channel CH2 with respect to the activation interval T3 of the channel CH3 or (considering the same function in a different way) by delaying the activation of the channel CH3 until the channel CH2 is deactivated.

It is possible to provide for dead times between the deactivation of one channel and the activation of the other, thereby ensuring that the activation of two channels does not overlap (which could produce an undesirable peak consumption).

The example shown in figure 4 therefore corresponds to the case in which the plurality of light generators of the lamp L identify a first CH1, a second CH2 and a third generator or channel (respectively CH1, CH2 and CH3) in conditions for which the sum of the respective activation intervals - T2 and T3 - of the second generator CH2 and of the third generator CH3 is less than the activation period, and in which:
- the first generator CH1 and the second generator CH2 are simultaneously activated over the respective activation interval T2 of the second generator CH2, and
- the first generator CH1 and the third generator CH3 are simultaneously activated over the respective activation interval T3 of the third generator CH3.

Here, too, the optimization method is based on the identification of at least one pair of channels or generators (CH2, CH3 in the case shown in figure 4) for which the sum of the respective activation intervals T2 and T3 is less than the activation period T. This is done in order to temporally offset the activation of the generators CH2 and CH3 in said pair, avoiding simultaneous activation.

Restrictions such as that shown above (T2+T3 ≤ T) are not usually particularly pressing insofar as, in Color Management Systems (CMS), it is found that said condition is satisfied almost always for at least two colors in the system.

By way of example, in a CMS system with three or more colors or channels, there is usually a "white" color which provides the majority of the light flux (take, for immediate reference, the channel CH1 shown in figure 4, activated with a duty cycle substantially equal to 100%, i.e. for an interval T1 virtually identical to the period T), whereas the other channels CH2 and CH3 may have the function of "harmonizing" or maintaining a certain color dot (Cx, Cy in the CIE 1981 diagram) or the corresponding CCT value.

For example, the other colors mentioned above may realize a function of adding blue and red to a fundamentally white system (where the red gives a "warmer" CCT, while the blue gives a "colder" CCT), so both of these components (red and blue) are never activated over intervals T2 and T3 longer than 50% of T.

As seen in this perspective, a strategy of the type referred to in figure 4 ignores, as it were, the power requirements of the "white" channel CH1 and applies the optimization strategy to the other channels CH2, CH3 so as to reduce the requirements in terms of peak power. The "alignment" function of the channels CH2, CH3 can thus be carried out independently of the channel CH1.

The example shown in figure 4 can be considered to be an illustrative embodiment in which one of the channels (for example the "white" channel which, in the text above, is assumed to correspond to the channel CH1) is extensively dominant, being activated with a much higher duty cycle than the other channels (for example with a duty cycle close to if not equal to 100%, so the interval T1 is roughly equal to the period P), and the source or lamp (luminaire) L has to be subjected to dimming. For this purpose, it is possible to effect a driving strategy for the channels, in which the channel with the highest duty cycle (for example CH1) is driven at 100% (or at the maximum value according to the optimization algorithms of the driving), additionally ensuring that the current of said channel can be reduced so as to make the light flux of said channel correspond to the desired level of dimming (this can take place according to known criteria, for example by means of a communication function with the power supply unit 1000 or an intervention on the control loop of said unit).

However, this method for regulating the light flux may result in a color shift in the radiation emitted by the channel CH1 and therefore in the mixed radiation emitted by the lamp L as a whole. In this case, it is possible to intervene with a color management algorithm or a Color Management System (CMS) algorithm and an LED color algorithm, in order to ensure that at least one of the other channels (CH2 and/or CH3 in the example under consideration here) can be accordingly regulated (by varying the interval T2 and/or the interval T3, always referring to the example under consideration here), bearing in mind the possibility to correct the color shift described above.

In this case, the intensity of the radiation emitted by the first generator (CH1 in the example under consideration) is varied, and said variation establishes a color shift in said radiation. Then, the respective activation interval (T2 and/or T3) of at least one of the other radiation generators CH2 and CH3 included in the source L is selectively varied so as to compensate for the color shift.

It will be appreciated that the requirements in terms of power consumed by the various channels are not necessarily the same (as already considered to a certain extent also with reference to figure 4).

These requirements may be known when designing the light source L, where it is known how many generators 10, 20, 30, ... (therefore channels CH1, CH2, CH3, ...) will be used and where the relative requirements in terms of current and voltage consumption are known. In sophisticated light systems, it is also possible to measure some or all of these parameters in real-time, or to provide at least an estimation so that the requirements in terms of supply power are known. It is also conceivable for said parameters to be neither design parameters nor calculated/estimated parameters, but instead regulation parameters supplied to the light source L by an external system (for example by means of a digital communication channel, etc.).

Figure 5 shows, according to the same modes of representation, a situation which is entirely similar to that shown in figure 4, again referring to three channels CH1, CH2 and CH3 intended to be activated, during period T, over respective activation intervals T1, T2 and T3 with respective power levels indicated by P1, P2 and P3. This is a situation where the power level P2 of the generator/channel CH2 is at least approximately equal to the sum P1+P3 of the power levels P1 and P3 of the two other generators/channels CH1 and CH3, i.e. P2 is roughly equal to P1+P3.

Once again, the part on the left-hand side of figure 5, indicated by a), refers to a non-optimized activation strategy, in which all three activation intervals T1, T2 and T3 commence at the same time as the period T. In this case, the set peak power of the unit 1000 has to be the sum of the three powers P1, P2 and P3, insofar as all three channels CH1, CH2 and CH3 are simultaneously active over an interval of length T2 at the start of the period T.

On the other hand, the part on the right-hand side, indicated by b), shows the result of the optimization operation, which initially provides for the activation of the channel CH2 over an interval T2 and then the simultaneous activation of channels CH1 and CH3 only after the channel CH2 has been deactivated.

In the exemplary embodiments shown in figure 5, there are therefore at least three generators/channels CH1, CH2 and CH3 present in a situation in which the respective activation power P2 of one of the generators (i.e. CH2) is at least approximately equal to the sum of the respective activation powers P1, P3 of the other two generators, i.e. CH1 and CH3. In this case, the first generator CH2 is then activated over the respective activation interval T2, keeping said other two generators CH1 and CH3 deactivated. Then, these other two generators CH1, CH3 are activated simultaneously once the first generator CH2 has been deactivated.

This example therefore also provides for the identification of at least one pair of generators (CH2 and CH1, or CH2 and CH3) for which the sum of the respective activation intervals (T2 and T1 or T2 and T3) is less than the activation period T, and for the temporal offsetting of the activation of the generators (CH2 and CH1 or CH2 and CH3) in said at least one pair, avoiding simultaneous activation (CH2 is not activated together with CH1 or together with CH3).

Once again, the optimization results in conditions in which the average power supplied is very close to, if not even coincident with, the peak power. Owing to the optimization process, the power supply unit 1000 can be dimensioned so as to supply a peak power virtually equal to P2=P1+P3, much less (in the case of the present example roughly equal to half) than the peak power required in non-optimized conditions.

It can be seen from the part on the right-hand side of figure 5 that the accomplished optimization and the consequent "packing" of the activation functions could also have the effect that, for a certain residual part of the period, there will be no power consumption, insofar as all the channels are deactivated. This condition may be advantageous insofar as the supply source 100 may be placed in standby mode with a reduced power supply, virtually zero.

The power supply unit 1000 may be managed, for example, by an element, such as a microcontroller, which is able to verify some reference data, i.e.:
- the fact that the %PPS values of all the generators/channels, if added together, never exceed 100%, while verifying that the sum value is as close as possible to 100%, and
- the fact that the activation/deactivation relationship (duty cycle on/off) of the various individual channels is maintained, for example so as to ensure that the desired CCT is maintained.

The management element mentioned above, aware of the requirements of the various channels, may be configured (for example in programming effected according to criteria known per se) such that it calculates the %PPS value for the various channels in order to identify, among the plurality of light generators CH1, CH2, CH3, ... of the source L, at least two subsets of generators to be activated at a given time, each of said at least two subsets comprising one generator having a respective supply power or a number of generators having a sum of the respective supply powers. The management element mentioned above may then intervene so as to activate, at said given time, the generator or the generators in the subset for which the respective supply power or the sum of the respective supply powers is closer to the maximum supply power which can be supplied by the unit 1000.

Said maximum suppliable power may be defined, for example during the design of the unit 1000, as a function of the peak value of the supply power which can be supplied to the various generators/channels CH1, CH2, CH3 during the activation period T.

The reference, when introducing the optimization strategy explained in figure 5, to at least two subsets of generators to be activated - at a given time - takes into account the fact that various channels activated simultaneously can be switched off or deactivated at different times so as to maintain the respective on/off relationships, and therefore, at a certain time, the channels to be considered for the optimization calculations are only those for which the required on time has not yet been reached.

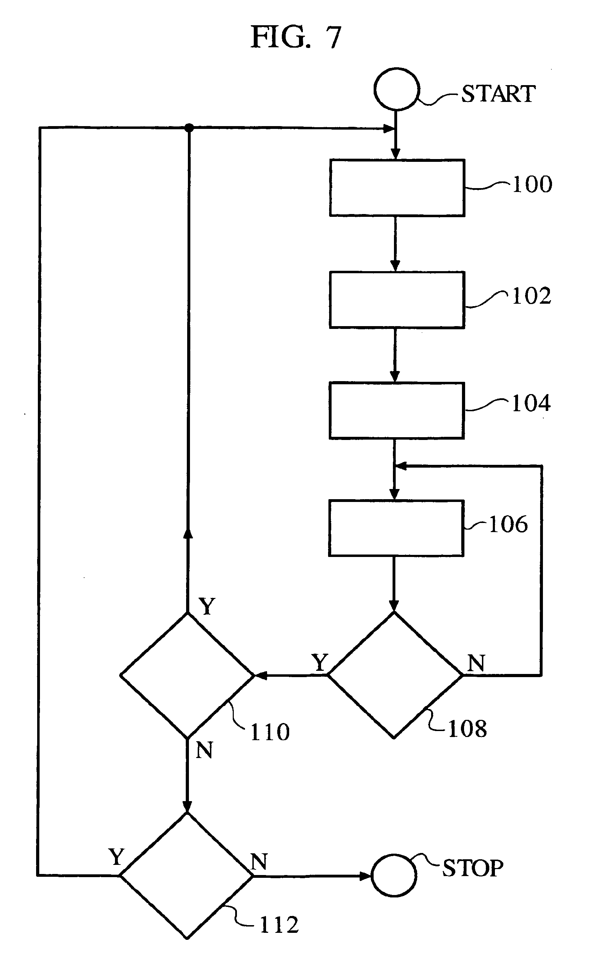

The exemplary strategy on the right-hand side of figure 5 corresponds to the following steps shown in the flow chart of figure 7.

After a start step START, the respective activation power values are determined (for example in terms of %PPS) in a step 100 - for all the channels to be activated or still to be activated (in the present case all three channels CH1, CH2 and CH3).

Next, in a step 102, the subsets of one or more channels are found in a condition where the sum of the relative %PPS does not exceed 100%.

These subsets may be only one subset or a plurality of subsets. In the latter case, that subset for which the sum of the %PPS is closest to 100% is selected in a step 104.

In a step 106, the only subset or the preselected subset (P2 in the example shown in figure 5) is used to activate the respective channel or channels (the channel CH2 in the present case).

The step 108 represents the verification of the fact that the channel or the activated subset of channels may be switched off once it has accomplished its activation function.

If the outcome of step 108 is negative, the activation is continued.

If, on the other hand, the outcome of step 108 is positive, indicating the fact that the channel or the activated subset of channels may be switched off, the sequence described above is repeated for the remaining channels to be activated. The step 110 aims precisely at verifying that said channels are present (positive outcome of step 110) until all the channels to be activated have been activated (negative outcome of step 110), and the commutation cycle is then repeated. In step 112, which is reached if the outcome of step 110 is negative, the need to repeat the commutation cycle is verified (positive outcome of step 112, returning to before step 110), with evolution toward the stopping of the system (STOP) if the outcome is negative.

The reference in this description (and, if appropriate, in the claims which follow) to "simultaneously" activated channels naturally does not exclude the fact that, in various embodiments of the "simultaneous" activation, it is possible to provide for small separation intervals between one activation and the other in order to avoid voltage and/or current fluctuations, which may possibly generate undesirable electromagnetic interference phenomena.

Various embodiments make a positive contribution to the operational efficiency of the power supply unit 1000, insofar as some of the losses (for example the resistive losses and the rectification losses) are lower in the power supply source 1000 at lower currents.

The alignment function described here can be effected by the unit 1000 (or in general by the light engine or lamp L as a whole), since these elements can communicate with one another to hypothesize an operating situation by avoiding overload situations and also carrying out an action for predicting the power supply requirement so as to adapt to temporally variable load requirements (for example in the subsequent duty cycles).

## Claims

1. A method for supplying power to a plurality of light generators (CH1, CH2, CH3) which emit respective chromatically different light radiations that can be mixed with one another to produce a mixed light radiation by selectively activating said generators (CH1, CH2, CH3) with respective supply powers (P1, P2, P3) over respective activation intervals (T1, T2, T3) included in an activation period (T), the method comprising:
- temporally offsetting the activation of the generators (CH1, CH2; CH2, CH3) in at least one pair of said generators, avoiding simultaneous activation
**characterized in that** the method further comprises
- identifying at least one pair of said generators (CH1, CH2; CH2, CH3) for which the sum of the respective activation intervals (T1, T2; T2, T3) is less than said activation period (T)
- the step of offsetting being performed on the identified at least one pair of said generators (CH1, CH2; CH2, CH3).

2. The method as claimed in claim 1, wherein said plurality of light generators comprise at least a first generator (CH1), a second generator (CH2) and a third generator (CH3) for which the sum of the respective activation intervals (T2, T3) of said second generator (CH2) and of said third generator (CH3) is less than said activation period (T), the method comprising:
- simultaneously activating said first generator (CH1) and said second generator (CH2) over the respective activation interval (T2) of said second generator (CH2), and
- simultaneously activating said first generator (CH1) and said third generator (CH3) over the respective activation interval (T3) of said third generator (CH3).

3. The method as claimed in claim 2, comprising:
- varying the intensity of the radiation emitted by said first generator (CH1), said variation establishing a color shift in said radiation emitted by said first generator (CH1), and
- selectively varying the respective activation interval (T2, T3) of at least one of said second (CH2) and third (CH3) light generators so as to compensate for said color shift.

4. The method as claimed in any one of the preceding claims, wherein said plurality of light generators comprise at least three generators (CH1, CH2, CH3), wherein the respective activation power (P2) of one generator (CH2) of said at least three generators (CH1, CH2, CH3) is at least approximately equal to the sum of the respective activation powers (P1, P3) of the other two generators (CH1, CH3) of said at least three generators (CH1, CH2, CH3) of said plurality, the method comprising:
- activating said one generator (CH2) over the respective activation interval (T2), keeping said other two generators (CH1, CH3) deactivated, and
- simultaneously activating said other two generators (CH1, CH3), keeping said one generator (CH2) deactivated.

5. The method as claimed in any one of the preceding claims, comprising:
- providing a power supply unit (1000) for said plurality of light generators (CH1, CH2, CH3), and
- setting the maximum supply power which can be supplied by said unit (1000) on the basis of the peak value of the supply power which can be supplied to said plurality of light generators (CH1, CH2, CH3) over said activation period (T).

6. The method as claimed in claim 5, comprising:
- identifying, among said plurality of light generators (CH1, CH2, CH3), at least two subsets of generators to be activated at a given time, each of said at least two subsets comprising one generator having a respective supply power or a number of generators having a sum of the respective supply powers (P1, P2, P3), and
- activating at said given time the generator or the generators in the subset for which the respective supply power or the sum of the respective supply powers (P1, P2, P3) is closer to said maximum value.

7. The method as claimed in any one of the preceding claims, comprising varying the intensity of the light radiation emitted by said generators (CH1, CH2, CH3) using a technique selected from: PWM modulation, pulse density modulation, alternating current and statistical dimming.

8. A power supply unit (1000) for light sources (L) comprising a plurality of light generators (CH1, CH2, CH3) which emit respective chromatically different light radiations that can be mixed with one another to produce a mixed light radiation, the power supply unit (1000) for selectively activating said generators (CH1, CH2, CH3) with respective supply powers (P1, P2, P3) over respective activation intervals (T1, T2, T3) included in an activation period (T), said power supply unit (1000) being configured to carry out the method as claimed in any one of claims 1 to 7.

9. The power supply unit as claimed in claim 8, comprising adjustment means (1002, 1004) for selectively varying at least one entity selected from:
- said respective activation intervals (T1, T2, T3) of said light generators (CH1, CH2, CH3) to vary the chromatic characteristics of said mixed light radiation, and
- the intensity of said mixed light radiation.

10. A light source, comprising:
- a plurality of light generators (CH1, CH2, CH3), preferably of the LED type, which emit respective chromatically different light radiations that can be mixed with one another to produce a mixed light radiation, and
- a power supply unit (1000) as claimed in claim 8 or claim 9, which supplies power to said plurality of light generators (CH1, CH2, CH3).

## Patentansprüche

1. Verfahren zum Liefern von Leistung an mehrere Lichterzeuger (CH1, CH2, CH3), die jeweils chromatisch unterschiedliche Lichtstrahlung aussenden, die miteinander gemischt werden können, um eine gemischte Lichtstrahlung zu erzeugen, indem die Erzeuger (CH1, CH2, CH3) mit entsprechenden Leistungsversorgungen (P1, P2, P3) über entsprechende Aktivierungsintervalle (T1, T2, T3), die in einer Aktivierungsperiode (T) enthalten sind, wahlweise aktiviert werden, wobei das Verfahren Folgendes umfasst:
- wahlweises Ausschalten der Aktivierung der Erzeuger (CH1, CH2; CH2, CH3) in wenigstens einem Paar der Erzeuger, um eine gleichzeitige Aktivierung zu vermeiden,
**dadurch gekennzeichnet, dass** das Verfahren ferner Folgendes umfasst:
- Identifizieren wenigstens eines Paares der Erzeuger (CH1, CH2; CH2, CH3), für das die Summe der jeweiligen Aktivierungsintervalle (T1, T2; T2, T3) kleiner als die Aktivierungsperiode (T) ist,
- wobei der Schritt des Ausschaltens an dem identifizierten wenigstens einen Paar der Erzeuger (CH1, CH2; CH2, CH3) aufgeführt wird.

2. Verfahren nach Anspruch 1, wobei die mehreren Lichterzeuger wenigstens einen ersten Erzeuger (CH1), einen zweiten Erzeuger (CH2) und einen dritten Erzeuger (CH3) umfassen, für die die Summe der jeweiligen Aktivierungsintervalle (T2, T3) des zweiten Erzeugers (CH2) und des dritten Erzeugers (CH3) kleiner als die Aktivierungsperiode (T) ist, wobei das Verfahren Folgendes umfasst:
- gleichzeitiges Aktivieren des ersten Erzeugers (CH1) und des zweiten Erzeugers (CH2) über das jeweilige Aktivierungsintervall (T2) des zweiten Erzeugers (CH2), und
- gleichzeitiges Aktivieren des ersten Erzeugers (CH1) und des dritten Erzeugers (CH3) über das jeweilige Aktivierungsintervall (T3) des dritten Erzeugers (CH3).

3. Verfahren nach Anspruch 2, das Folgendes umfasst:
- Verändern der Intensität der durch den ersten Erzeuger (CH1) ausgesendeten Strahlung, wobei die Veränderung in der von dem ersten Erzeuger (CH1) ausgesendeten Strahlung eine Farbverschiebung bewirkt, und
- wahlweises Verändern des jeweiligen Aktivierungsintervalls (T2, T3) des zweiten (CH2) und/oder des dritten (CH3) Lichterzeugers, um diese Farbverschiebung auszugleichen.

4. Verfahren nach einem der vorhergehenden Ansprüche, wobei die mehreren Lichterzeuger wenigstens drei Erzeuger (CH1, CH2, CH3) umfassen, wobei die jeweilige Aktivierungsleistung (P2) eines Erzeugers (CH2) der wenigstens drei Erzeuger (CH1, CH2, CH3) wenigstens ungefähr gleich der Summe der jeweiligen Aktivierungsleistungen (P1, P3) der beiden anderen Erzeuger (CH1, CH3) der wenigstens drei Erzeuger (CH1, CH2, CH3) der Mehrzahl ist, wobei das Verfahren Folgendes umfasst:
- Aktivieren des einen Erzeugers (CH2) über das jeweilige Aktivierungsintervall (T2), während die beiden anderen Erzeuger (CH1, CH3) deaktiviert gehalten werden, und
- gleichzeitiges Aktivieren der beiden anderen Erzeuger (CH1, CH3), während der eine Erzeuger (CH2) deaktiviert gehalten wird.

5. Verfahren nach einem der vorhergehenden Ansprüche, das Folgendes umfasst:
- Bereitstellen einer Leistungsversorgungseinheit (1000) für die mehreren Lichterzeuger (CH1, CH2, CH3) und
- Einstellen der maximalen Versorgungsleistung, die durch die Einheit (1000) geliefert werden kann, anhand des Spitzenwerts der Versorgungsleistung, die an die mehreren Lichterzeuger (CH1, CH2, CH3) während der Aktivierungsperiode (T) geliefert werden kann.

6. Verfahren nach Anspruch 5, das Folgendes umfasst:
- Identifizieren unter den mehreren Lichterzeugern (CH1, CH2, CH3) wenigstens zweier Untermengen von Erzeugern, die zu einer gegebenen Zeit aktiviert werden sollen, wobei jede der wenigstens zwei Untermengen einen Erzeuger mit einer entsprechenden Versorgungsleistung oder eine Anzahl von Erzeugern, die eine Summe entsprechender Versorgungsleistungen (P1, P2, P3) haben, umfasst, und
- Aktivieren zu der gegebenen Zeit des Erzeugers oder der Erzeuger in der Untermenge, für den bzw. die die Versorgungsleistung bzw. die Summe der jeweiligen Versorgungsleistungen (P1, P2, P3) näher bei dem Maximalwert liegt.

7. Verfahren nach einem der vorhergehenden Ansprüche, das das Verändern der Intensität der von den Erzeugern (CH1, CH2, CH3) ausgesendeten Lichtstrahlung unter Verwendung einer Technik, die ausgewählt ist aus: PWM-Modulation, Impulsdichtemodulation Wechselstrom- und Statistik-Dämpfung, umfasst.

8. Leistungsversorgungseinheit (1000) für Lichtquellen (L), die mehrere Lichterzeuger (CH1, CH2, CH3) enthält, die chromatisch unterschiedliche Lichtstrahlung, die miteinander gemischt werden können, um eine gemischte Lichtstrahlung zu erzeugen, aussenden, wobei die Leistungsversorgungseinheit (1000) dazu dient, die Erzeuger (CH1, CH2, CH3) wahlweise mit jeweiligen Versorgungsleistungen (P1, P2, P3) über entsprechende Aktivierungsintervalle (T1, T2, T3), die in einer Aktivierungsperiode (T) enthalten sind, zu aktivieren, wobei die Leistungsversorgungseinheit (1000) konfiguriert ist, das Verfahren nach einem der Ansprüche 1 bis 7 auszuführen.

9. Leistungsversorgungseinheit nach Anspruch 8, die Einstellmittel (1002, 1004) zum wahlweisen Verändern wenigstens einer Entität umfassen, die ausgewählt ist aus:
- den jeweiligen Aktivierungsintervallen (T1, T2, T3) der Lichterzeuger (CH1, CH2, CH3), um die chromatische Charakteristik der gemischten Lichtstrahlung zu verändern, und
- der Intensität der gemischten Lichtstrahlung.

10. Lichtquelle, die Folgendes umfasst:
- mehrere Lichterzeuger (CH1, CH2, CH3), vorzugsweise vom LED-Typ, die jeweilige chromatisch unterschiedliche Lichtstrahlung aussenden, die miteinander gemischt werden können, um eine gemischte Lichtstrahlung zu erzeugen, und
- eine Leistungsversorgungseinheit (1000) nach Anspruch 8 oder Anspruch 9, die Leistung an die mehreren Lichterzeuger (CH1, CH2, CH3) liefert.

## Revendications

1. Procédé d'alimentation en énergie d'une pluralité de générateurs de lumière (CH1, CH2, CH3) qui émettent des rayonnements lumineux respectifs chromatiquement différents qui peuvent être mélangés les uns aux autres afin de produire un rayonnement lumineux mixte en activant sélectivement lesdits générateurs (CH1, CH2, CH3) avec des puissances d'alimentation respectives (P1, P2, P3) sur des intervalles d'activation respectifs (T1, T2, T3) inclus dans une période d'activation (T), le procédé comprenant:
- décalage temporel de l'activation des générateurs (CH1, CH2; CH2, CH3) dans au moins une paire desdits générateurs, évitant l'activation simultanée **caractérisé en ce que** le procédé comprend en outre
- identification d'au moins une paire desdits générateurs (CH1, CH2; CH2, CH3) pour lesquels la somme des intervalles d'activation respectifs (T1, T2; T2, T3) est inférieure à ladite période d'activation (T)
- effectuation de l'étape de décalage sur ladite au moins une paire identifiée desdits générateurs (CH1, CH2; CH2, CH3), évitant l'activation simultanée.

2. Procédé selon la revendication 1, dans lequel ladite pluralité de générateurs de lumière comprennent au moins un premier générateur (CH1), un deuxième générateur (CH2) et un troisième générateur (CH3) pour lesquels la somme des intervalles d'activation respectifs (T2, T3) dudit deuxième générateur (CH2) et dudit troisième générateur (CH3) est inférieure à ladite période d'activation (T), le procédé comprenant :
- activation simultanée dudit premier générateur (CH1) et dudit deuxième générateur (CH2) sur l'intervalle d'activation respectif (T2) dudit deuxième générateur (CH2), et
- activation simultanée dudit premier générateur (CH1) et dudit troisième générateur (CH3) sur l'intervalle d'activation respectif (T3) dudit troisième générateur (CH3).

3. Procédé selon la revendication 2, comprenant :
- variation de l'intensité du rayonnement émis par ledit premier générateur (CH1), ladite variation établissant un décalage de couleur dans ledit rayonnement émis par ledit premier générateur (CH1), et
- variation sélective de l'intervalle d'activation respectif (T2, T3) d'au moins l'un desdits deuxième (CH2) et troisième (CH3) générateurs de lumière de manière à compenser ledit décalage de couleur.

4. Procédé selon l'une quelconque des revendications précédentes, dans lequel ladite pluralité de générateurs de lumière comprennent au moins trois générateurs (CH1, CH2, CH3), dans lequel la puissance d'activation respective (P2) d'un générateur (CH2) desdits au moins trois générateurs (CH1, CH2, CH3) est au moins approximativement égale à la somme des puissances d'activation respectives (P1, P3) des deux autres générateurs (CH1, CH3) desdits au moins trois générateurs (CH1, CH2, CH3) de ladite pluralité, le procédé comprenant :
- activation dudit premier générateur (CH2) sur l'intervalle d'activation respectif (T2), en maintenant lesdits deux autres générateurs (CH1, CH3) désactivés, et
- activation simultanée desdits deux autres générateurs (CH1, CH3), en maintenant ledit premier générateur (CH2) désactivé.

5. Procédé selon l'une quelconque des revendications précédentes, comprenant :
- fourniture d'une unité d'alimentation électrique (1000) pour ladite pluralité de générateurs de lumière (CH1, CH2, CH3), et
- réglage de la puissance d'alimentation maximale qui peut être délivrée par ladite unité (1000) sur la base de la valeur de crête de la puissance d'alimentation qui peut être fournie à ladite pluralité de générateurs de lumière (CH1, CH2, CH3) sur ladite période d'activation (T).

6. Procédé selon la revendication 5, comprenant :
- identification, parmi ladite pluralité de générateurs de lumière (CH1, CH2, CH3), d'au moins deux sous-ensembles de générateurs devant être activés à un moment donné, chacun desdits au moins deux sous-ensembles comprenant un générateur ayant une puissance d'alimentation respective ou un certain nombre de générateurs ayant une somme des puissances d'alimentation respectives (P1, P2, P3), et
- activation audit moment donné du générateur ou des générateurs du sous-ensemble pour lequel la puissance d'alimentation respective ou la somme des puissances d'alimentation respectives (P1, P2, P3) est plus proche de ladite valeur maximale.

7. Procédé selon l'une quelconque des revendications précédentes, comprenant la variation de l'intensité du rayonnement lumineux émis par lesdits générateurs (CH1, CH2, CH3) en utilisant une technique choisie parmi : modulation d'impulsion en durée, modulation de densité d'impulsions, courant alternatif et gradation statistique.

8. Unité d'alimentation électrique (1000) pour des sources lumineuses (L) comprenant une pluralité de générateurs de lumière (CH1, CH2, CH3) qui émettent des rayonnements lumineux respectifs chromatiquement différents qui peuvent être mélangés les uns aux autres afin de produire un rayonnement lumineux mixte, l'unité d'alimentation électrique (1000) servant à activer sélectivement lesdits générateurs (CH1, CH2, CH3) avec des puissances d'alimentation respectives (P1, P2, P3) sur des intervalles d'activation respectifs (T1, T2, T3) inclus dans une période d'activation (T), ladite unité d'alimentation électrique (1000) étant configurée pour exécuter le procédé tel que revendiqué dans l'une quelconque des revendications 1 à 7.

9. Unité d'alimentation électrique selon la revendication 8, comprenant des moyens de réglage (1002, 1004) pour faire varier sélectivement au moins une entité choisie parmi :
- lesdits intervalles d'activation respectifs (T1, T2, T3) desdits générateurs de lumière (CH1, CH2, CH3) pour faire varier les caractéristiques chromatiques dudit rayonnement lumineux mixte, et
- l'intensité dudit rayonnement lumineux mixte.

10. Source de lumière, comprenant :
- une pluralité de générateurs de lumière (CH1, CH2, CH3), de préférence de type LED, qui émettent des rayonnements lumineux respectifs chromatiquement différents qui peuvent être mélangés les uns aux autres afin de produire un rayonnement lumineux mixte, et
- une unité d'alimentation électrique (1000) selon la revendication 8 ou la revendication 9, qui alimente en énergie ladite pluralité de générateurs de lumière (CH1, CH2, CH3).
